# EUROPÄISCHE PATENTSCHRIFT

(11) **EP 1 988 269 B1**
(45) Veröffentlichungstag und Bekanntmachung des Hinweises auf die Patenterteilung: **04.11.2009**
(21) Anmeldenummer: 08103365.6
(22) Anmeldetag: 03.04.2008
(51) Int. Cl.: F02D 9/04, F02D 9/10, F02M 25/07, F16K 1/22

(54) **Drosselklappe und damit ausgestattete Auspuffanlage**
Throttle valve and exhaust device fitted with same
Clapet d'étranglement et installation d'échappement équipée de celui-ci

(30) Priorität: 03.05.2007 DE 202007006463 U
(43) Veröffentlichungstag der Anmeldung: 05.11.2008
(73) Patentinhaber: Capristo, Antonio, 59846 Sundern (DE)
(72) Erfinder: Capristo, Antonio, 59846 Sundern (DE)
(74) Vertreter: Kewitz, Ansgar

(56) Entgegenhaltungen:
- DE-A1- 3 707 904
- DE-A1- 3 802 243
- DE-A1-102006 048 713
- US-A1- 2006 059 902

## Beschreibung

Die Erfindung betrifft eine Drosselklappe nach dem Oberbegriff des Anspruchs 1 sowie eine damit ausgestattete Auspuffanlage nach dem Oberbegriff des nebengeordneten Anspruchs.

Drosselklappen kommen z.B. in der Fahrzeugtechnik an verschiedenen Stellen zum Einsatz, insbesondere auch im Bereich von Auspuffanlagen. Üblicherweise sind die Drosselklappen auf einer Achse bzw. Welle drehbar gelagert, wobei die Enden der Achse bzw. Welle von einer Lagerbuchse eines Gleitlagers aufgenommen werden. Um eine reibungsarme Lagerung herbei zu führen, sind auch Drosselklappen, deren Achse an ihren Enden jeweils in einer kugelförmigen, insbesondere halbkugelförmigen, Lagerbuchse drehbar aufgenommen wird. Dabei ist ein Federelement vorgesehen, das die Lagerbuchse in eine Ausnehmung des Gehäuseabschnitts drückt, welche die Lagerbuchse zumindest teilweise formschlüssig aufnimmt. Üblicherweise wird als Federelement eine Spiralfeder verwendet, die mit einem Ende gegen einen von außen am Gehäuse befestigten Deckel drückt und mit dem anderen Ende gegen die ebene Fläche bzw. Stirnfläche der Halbkugel drückt, so dass eine von Außen wirkende Federkraft die Halbkugel in die Ausnehmung bzw. das Gegenlager des Gehäuseabschnittes hinein drückt. Die Halbkugel weist dabei eine Bohrung bzw. ein Loch auf, welches von der Achse bzw. dem Achsenende durchdrungen wird. Durch das Andrücken der halbkugelförmigen Lagerbuchse werden ein gewisser Formschluss zwischen Lagerbuchse und Gehäuse sowie eine Zentrierung der Lagerbuchse selbst erreicht. Die Spiralfeder ist dazu an den Enden üblicherweise abgeflacht, so dass sie gleichmäßig gegen die plane Ebene der Halbkugel drückt.

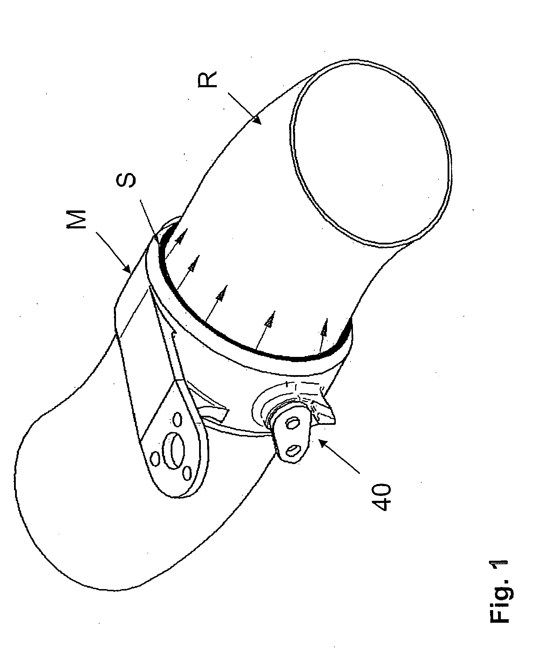

In der Patentschrift CH 340379 wird eine Drossel- bzw. Bremsklappe beschrieben, bei der bereits eine zweiseitige Lagerung der Achse bzw. Welle vorgesehen ist (s. dort Fig. 1). Jedoch kommen dort zwei Federn mit unterschiedlicher Funktion zum Einsatz. Eine erste Feder 20 wirkt auf eine kugelförmige Ringscheibe 17 und übt somit eine gewisse Zugspannung in der Achse aus. Jedoch ist dort auch eine zweite Feder 23 vorgesehen, die am oberen Ende der Achse angreift und dagegen wirkt, indem sie in axialer Richtung die Achse wiederum mit einer Druckkraft beaufschlagt (s. dort Beschreibung S. 2, linke Spalte, Z. 29 - 32 sowie Zeilen 52 ff.). Beide Federn 20 und 23 wirken also entgegengesetzt, wobei vorgesehen ist, dass die Kraft der zweiten Feder 23 größer ist, so dass die Achse auf Druck vorgespannt wird (s. dort S. 2, rechte Spalte, Z. 86 - 92). Dadurch kann bei zu hohem Staudruck an der Drossel- bzw. Bremsklappe, sich diese verschwenken und die gestauten Gase können zur Entlastung um die Klappe herum entweichen. Diese Konstruktion ist also recht aufwendig gestaltet und dient insbesondere dem Zweck, einen zu hohen Staudruck an der Klappe zu vermeiden.

Die DE 10 2004 032 845 A1 beschreibt ein Klappenventil für die Abgasanlage eines Kraftfahrzeugs. Dabei wird die Welle bzw. Achse der Drosselklappe lediglich in einer ringförmigen Buchse 29 gelagert (s. dort Fig. 1). Auf der Gegenseite befindet sich eine Ausbuchtung 14, die als Gegenlager ausgebildet ist. Eine Schraubenfeder 24 drückt die Achse 2 in Richtung dieses Gegenlagers 14. Die Achse selbst erfährt somit keine axiale Vorspannung.

In der DE 2 004 990 wird lediglich eine einseitige Lagerung der Welle vorgeschlagen.

Aus der US 5,884,898 ist ein Klappenventil bekannt, bei dem mittels einer Feder 9 (s. dort Fig. 1a, Fig. 8) auf die Lagerung bzw. Achse 4 eingewirkt wird. Das Gegenlager wird insbesondere durch einen Stift (Pin 5) gebildet, wobei die Feder 9 die Achse und Drosselklappe in Richtung des Gegenlagers drückt, um dort punktuell von dem Stift 5 aufgefangen zu werden. Somit wird dort die Achse mit einer Druckkraft beaufschlagt, um die Gegenlagerung in dem Stift 5 zu sichern.

Aus der DE 37 07 904 A1 ist ein Klappenventil bekannt bei der die Lagerbüchsen durch eine Feder gegen das Gehäuse gedrückt werden.

Die Drosselklappen mit den bekannten Lagerungen weisen jedoch den Nachteil auf, dass die Achse nicht optimal in axialer Richtung spielfrei gesichert ist. Außerdem muss in radialer Richtung evtl. eine größere Toleranz bzw. ein gewisses Spiel vorhanden sein, um auch bei Maßabweichungen die Drehung der Achse zu ermöglichen. Ein radiales wie auch axiales Spiel führen jedoch während des Betriebs der Auspuffanlage zu störenden Klappergeräuschen. Auch können sich noch weitere Probleme ergeben, insbesondere dann, wenn die Drosselklappe in verschweißten Teilen eingesetzt sind. Diese bekannten Lager werden häufig in Form von Gleitlagern unter anderem auch in Auspuffmuffen eingesetzt, welche üblicherweise mit einem Auspuffrohr verschweißt werden. Beim Verschweißen kann aufgrund von Temperatureinwirkung sich das Material jedoch verziehen, so dass die Drosselklappe blockiert wird. Hier könnte eine vorgesehene Mindesttoleranz in der Lagerbuchse abhelfen, was jedoch wiederum kontraproduktiv zu einer möglichst spielfreien Lagerung der Achse ist.

Somit ist es Aufgabe der Erfindung, eine Drosselklappe bereit zu stellen, welche die oben genannten Nachteile nicht aufweist. Außerdem soll eine damit vorgesehene Auspuffanlage vorgeschlagen werden.

Gelöst wird die Aufgabe durch ein Lager mit den Merkmalen des Anspruchs 1 sowie durch eine Auspuffanlage mit den Merkmalen des nebengeordneten Anspruchs.

Demnach wird eine Drosselklappe vorgeschlagen, die eine Lagerung aufweist, bei der in dem Lager das Federelement auf einer der Lagerbuchse gegenüber liegenden Seite gegen ein Anschlagelement drückt, welches mit der Achse verbunden ist und somit die Achse gegen die Lagerbuchse axial auf Zugspannung vorspannt.

Durch diese Maßnahmen wird die Achse bzw. Welle selbst in axialer Richtung mit einer Vorspannkraft beaufschlagt, die als Zugspannung axial auf die Achse wirkt. Dadurch stellt sich eine selbst zentrierende Wirkung auch auf die Achse selbst ein. Zudem stellt das Federelement auch den Formschluss der Lagerbuchse mit dem Gehäuseabschnitt her und sichert diesen elastisch. Durch die hier vorgeschlagene Konstruktion auch ein evtl. Materialverzug, der etwa durch Schweißen oder Temperatureinwirkung entstehen kann, ausgeglichen. Die Achse bzw. Welle bleibt immer optimal zentriert und fluchtet mit der idealen Drehachse, so dass keine Blockierung auftreten kann. Das hier vorgeschlagene Lager mit der gegen die Achse vorgespannten Lagerbuchse wirkt somit als Ausgleichslager und stellt sicher, dass die Achse optimal ausgerichtet und genau sowie sicher geführt ist. Durch den sich einstellenden Vorspanneffekt wird erreicht, dass sich die Achse immer spielfrei drehen kann, ohne Vibrationen zuzulassen.

Weitere Vorteile ergeben sich aus den Unteransprüchen.

Demnach ist es besonders vorteilhaft, wenn als Anschlagelement ein Schraubelement, insbesondere eine Schraube oder Mutter vorgesehen wird, wobei dieses mittels eines an der Achse vorgesehenen Gewindes mit der Achse verbunden ist und wobei das Federelement die Achse somit auf Zug vorspannt. In diesem Zusammenhang ist es von Vorteil, wenn das Schraubelement verstellbar ist und eine Auslenkung des Federelements zur Einstellung einer Zugspannung für die axial vorgespannte Achse vorgibt. Somit wird ein per Schraube oder Mutter einstellbarer Federeffekt herbeigeführt, mit dem das Lager optimal auf die Gegebenheiten eingestellt werden kann.

Weiterhin ist es von Vorteil, wenn die kugelförmige Lagerbuchse mittels einer Halbkugel gebildet wird, welche von der Achse durchdrungen wird, wobei die Halbkugel eine Öffnung bzw. Bohrung aufweist, die um eine vorgebbare Toleranz größer als der Durchmesser der Achse ist. Bei der erfindungsgemäßen Konstruktion kann die Öffnung bzw. Bohrung in der Halbkugel durchaus deutlich größer als der Durchmesser der Achse gewählt werden, ohne dass der Selbstzentrierungseffekt der Achse hierdurch abgeschwächt werden würde. Insbesondere bei einer etwas größer dimensionierten Bohrung ist es vorteilhaft, wenn das Federelement eine Spiralfeder ist, welche zumindest an demjenigen Ende, das auf die Lagerbuchse wirkt, nicht abgeflacht ist, sondern mit einem schrägen oder spitzen Ende auf einen Teil einer Lagerbuchse, insbesondere partiell auf die Stirnfläche der Halbkugel, drückt. Hierdurch wird ein unsymmetrischer Druck auf die Halbkugel in der Lagerbuchse bewirkt, so dass eine evtl. größere Bohrung und das sich damit einstellende Spiel kompensiert werden, indem die schräg angedrückte Halbkugel sich verschränkt bzw. schräg zur Achse ausrichtet, wodurch sie zumindest an den Rändern der Bohrung formschlüssig auf dem äußeren Rand der Achse anliegt. Damit wiederum wird auch bei einer recht großen Bohrung eine Zentrierung von Achse und Lager sowie eine formschlüssige Abdichtung in der Lagerung selbst erzielt. Vorzugsweise kann auch zwischen dem Federelement und der Lagerbuchse eine Gleitscheibe vorgesehen werden.

Bevorzugt ist die Lagerbuchse als eine Halbkugel ausgebildet.

Zudem ist es vorteilhaft, wenn die Ausnehmung als, insbesondere radial, schwimmend gelagertes Aufnahme-Element für die, insbesondere halbkugelförmige, Lagerbuchse ausgebildet ist. Dadurch wird die Lagerung der Drosselklappe noch toleranter gegenüber Schwankungen bzw. Materialausdehnungen In diesem Zusammenhang ist es auch von Vorteil, wenn das Aufnahme-Element konkav geformt ist, um die Lagerbuchse bzw. die Halbkugel aufzunehmen, und eine Bohrung aufweist, die größer als der Durchmesser der Achse bzw. Welle ist.

Auch ist es von Vorteil, wenn die Lagerbuchse bzw. Halbkugel eine Stirnfläche mit einer darin ausgebildeten Kugellaufbahn für einen Kugelring aufweist. Ebenso wird vorteilhafter Weise zwischen Federelement und Lagerbuchse eine Ringscheibe mit Kugellaufbahn für den Kugelring vorgesehen. Dadurch wird die Lagerung der Achse bzw. Welle noch weiter verbessert.

Die hier verwendeten Begriffe Achse bzw. Welle betreffen jede Art von stabförmigen Maschinenteilen zur drehbaren Lagerung und sollen hier zum Ausdruck bringen, dass die drehbare Lagerung der Drosselklappe sowohl antriebslos (freie Achse) wie auch die angetrieben (Welle z.B. mit Stellhebel bzw. Stellmotor verbunden) ausgeführt sein kann.

Die Erfindung selbst und die sich daraus ergebenden Vorteile werden im Folgenden noch näher anhand von Ausführungsbeispielen und unter Bezugnahme auf beiliegende Zeichnungen beschrieben, die folgende Darstellungen wiedergeben:
- Fig. 1: zeigt schematisch den Teil einer erfindungsgemäßen Auspuffanlage mit einer verschweißten Auspuffmuffe, welche die erfindungsgemäße Drosselklappe aufweist.
- Fig. 2: zeigt in einer Querschnittsansicht die erfindungsgemäße Drosselklappe mit Lagerung innerhalb eines Gehäuseabschnittes der Auspuffmuffe.
- Fig. 3a: zeigt zur Fig. 2 im Detail den Aufbau eines mit einem Federelement versehenen Lagers für die Drosselklappe.
- Fig. 3b und 3c: zeigen weitere Ausführungsformen zur Lagerung der Drosselklappe.
- Fig. 4: zeigt in weiteren Details die Anordnung des Federelementes innerhalb des Lagers.

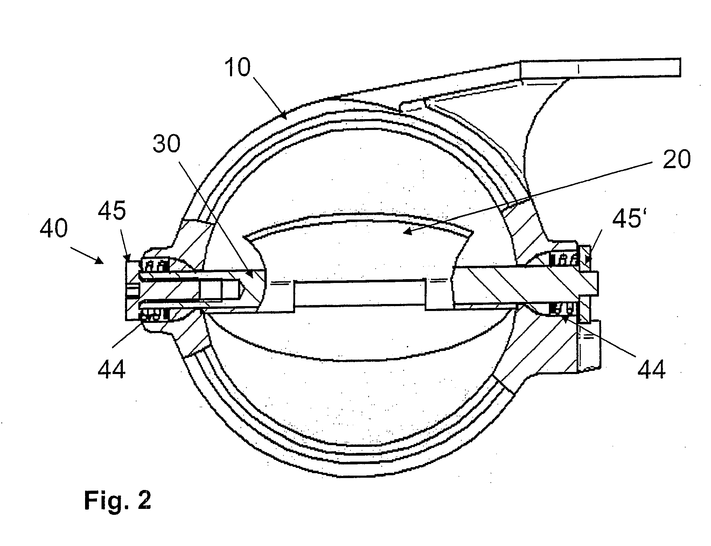

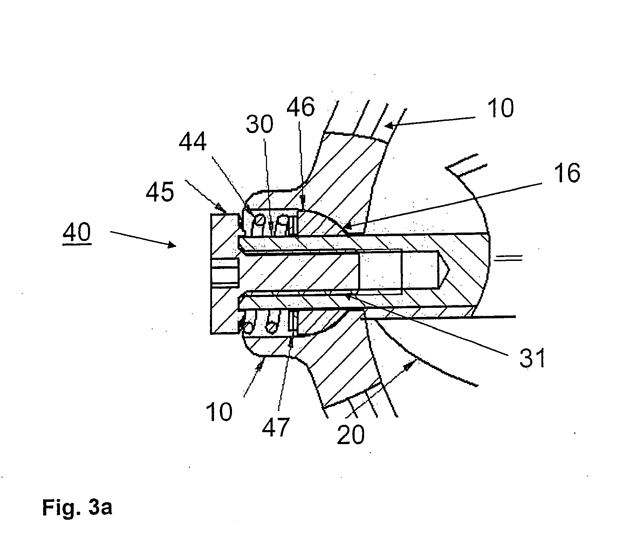

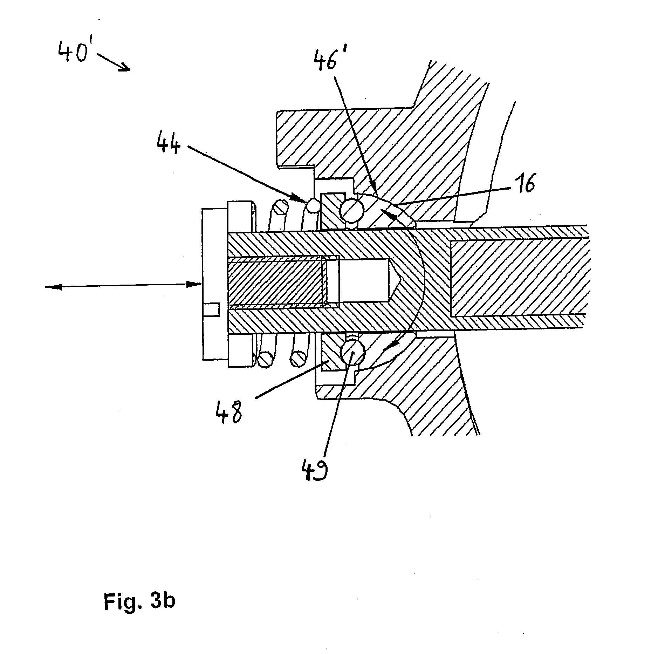

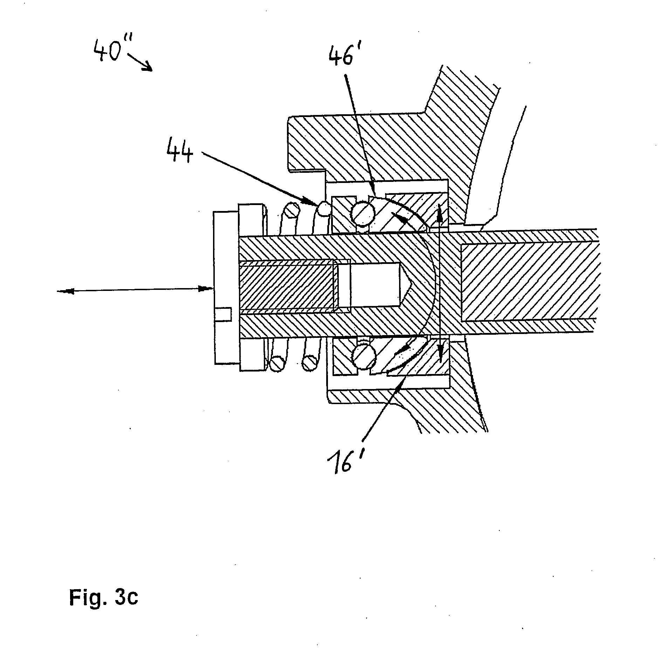

In der Fig. 1 ist der Teil einer Auspuffanlage dargestellt, wo eine Auspuffmuffe M mit einem Auspuffrohr R verschweißt ist. Üblicherweise wird hierzu eine umlaufende Schweißnaht S gesetzt. Innerhalb der Muffe bzw. in einem Gehäuseabschnitt davon ist eine erfindungsgemäß gelagerte Drosselklappe angeordnet, die an beiden Enden der Achse mit einem federkraft-beaufschlagten Lager 40 versehen ist, das vorzugsweise als Gleitlager ausgebildet ist. Der Aufbau des Lagers selbst wird näher noch anhand der Figuren 2 und 3 beschrieben. Hierbei wird auch verdeutlicht, dass die Lagerung eine ausgleichende Wirkung hat, welche insbesondere auch Materialverzug aufgrund der Verschweißung kompensieren kann. Der Verzug des Materials bzw. die durch Schweißen auftretenden negativen Materialbeeinflussungen sind in der Fig. 1 durch entsprechende Pfeile dargestellt.

Die Fig. 2 zeigt als erstes Ausführungsbeispiel nun eine Querschnittsansicht eines Gehäuseabschnitts 10 innerhalb der Auspuffmuffe. In dem Gehäuseabschnitt 10 ist eine Drosselklappe 20 drehbar gelagert. Die Drosselklappe 20 befindet sich dazu auf einer Achse 30, welche zumindest an einem Ende, hier vorzugsweise an beiden Enden, mit dem erfindungsgemäßen Lager 40 versehen ist. Das Lager 40 wird im Weiteren noch anhand der Fig. 3 genauer beschrieben und weist insbesondere ein Federelement 44 auf, welches an einem Ende gegen ein Anschlagelement 45 bzw. 45' drückt, so dass die Achse axial vorgespannt ist.

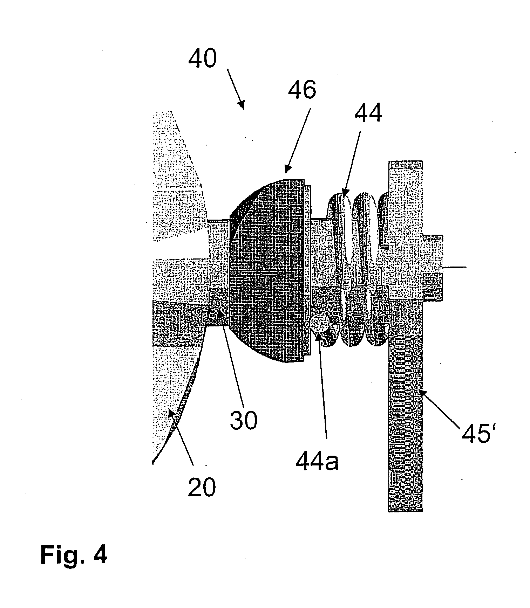

In der Fig. 3a ist der Aufbau des Lagers 40 nach Fig. 2 genauer dargestellt. Wie dort zu sehen ist, befindet sich in einer Ausnehmung 16 des Gehäuseabschnittes 10 eine halbkugelförmige Lagerbuchse 46. Diese wird durch eine Halbkugel gebildet, die eine Bohrung aufweist und von einem Ende der Achse 30 durchdrungen bzw. durchstoßen wird. In dem Lager 40 ist weiterhin ein Federelement 44 vorgesehen, das hier vorzugsweise als Spiralfeder ausgeführt ist. Das Federelement 44 drückt an einem seiner Enden (s. auch 44a in Fig. 4) gegen die Halbkugel der Lagerbuchse 46 und mit dem gegenüber liegenden Ende gegen ein Anschlagelement 45, das hier in Gestalt einer Schraube ausgebildet ist. Die Schraube 45 ist über ein Gewinde 31 mit der Achse 30 verbunden. Das Federelement bzw. die Spiralfeder 44 bewirkt nun eine sich zwischen Lagerbuchse 46 und Anschlagelement 45 einstellende Federkraft. Diese Federkraft sorgt zum einen dafür, dass die Lagerbuchse 46 bzw. die Halbkugel formschlüssig in als Gegenlager wirkende Ausnehmung 16 gedrückt wird. Zum anderen wird das Anschlagelement 45 nach außen in axialer Richtung gedrückt, wodurch über die Verbindung mit der Achse 30 diese selbst in axialer Richtung auf Zug vorgespannt wird. Somit bewirkt die Spiralfeder 44 sowohl eine passgenaue Lagerung innerhalb der Lagerbuchse 46 wie auch eine axiale Zugspannung in der Achse 30. Die in axialer Richtung auftretende Kraft führt dazu, dass sich sowohl die Lagerbuchse 46 wie auch die Achse 30 sich stets selbst zentrieren und somit optimal für die Lagerung ausrichten und mit der gedachten Idealachsenlinie fluchten. Über die Schraube 45, welche als Einstellschraube ausgeführt ist, kann die Auslenkung der Spiralfeder 44 optimal eingestellt werden. Die Spiralfeder ist nicht wie üblich an ihren Enden abgeflacht, um möglichst gleichmäßig auf die Halbkugel bzw. die Anschlagfläche zu drücken, sondern berührt die Halbkugel bzw. die Anschlagfläche nur einseitig, so dass die Halbkugel innerhalb der Lagerbuchse 46 eine verschränkende Auslenkung erfährt, sofern ein gewisses Spiel zwischen Lagerbuchse 46 und Achse auftreten sollte. Durch diese Maßnahme wird die Achse zudem auch in radialer Richtung optimal und formschlüssig gesichert.

Das in Fig. 3a dargestellte Lager 40 wird vorzugsweise an beiden Enden der Achse 30 vorgesehen, um die Drosselklappe 20 innerhalb des Gehäuseabschnitts 10 optimal zu lagern. Anstelle einer Schraube 45 kann auch jedes andere Anschlagelement, wie etwa eine Mutter oder Scheibe vorgesehen werden. Wie bereits anhand der Fig. 1 und auch anhand der Fig. 2 zu sehen ist, kann dies beispielsweise die Scheibe bzw. Platte 45' eines Hebelelementes sein, welches mit der Achse verpresst ist. Die weiter unten beschriebene Fig. 4 zeigt diese Ausführungsvariante noch näher im Detail.

Zunächst wird hier auf die Fig. 3b und 3c eingegangen, die weitere Ausführungsformen zeigen. Hierin sind auch bereits oben beschriebene Elemente vorhanden, die deshalb auch hier mit denselben Bezugszeichen versehen sind. Beispielsweise ist auch hier die Lagerbuchse als eine Halbkugel ausgebildet.

In der Variante nach Fig. 3b ist die als Lagerbuchse ausgestalte Halbkugel 46' an ihrer Stirnfläche mit einer darin ausgebildeten Kugellaufbahn für einen Kugelring 49 versehen. Weiterhin ist bei dem dort gezeigten Lager 40' zwischen dem Federelement 44 und Lagerbuchse bzw. Halbkugel 46' eine Ringscheibe 49 mit Kugellaufbahn für den Kugelring 49 vorgesehen. Somit wird dort durch den Kugelring 49 eine weiter verbesserte Lagerung erreicht, bei der die Drehbeweglichkeit der Drosselklappe noch mehr erhöht ist.

In der Variante nach Fig. 3c ist bei dem dort gezeigten Lager 40"zur Aufnahme der Lagerbuchse bzw. Halbkugel 46' ein radial schwimmend gelagertes Aufnahme-Element 16' vorgesehen. Dieses ist konkav geformt, um die Halbkugel 46' optimal aufzunehmen, und hat eine von der Achse bzw. Welle durchstoßene Bohrung, die größer als der Durchmesser der Achse bzw. Welle ist. Somit ergibt sich ein radiales Spiel, mit dem bei evtl. auftretendem Materialverzug (z.B. beim Anschweißen der Vorrichtung) noch besser verhindert werden kann, dass die Drosselklappe bzw. der Klappenteller sich am Gehäuse verklemmt.

Die Fig. 4 bezieht sich insbesondere auf die Variante nach Fig. 2 und 3a, ist aber nicht darauf beschränkt. Die dort in Fig. 3a gezeigte Schraube 45 dient auch als Anschlagelement für das Federelement 44. Wie nun in der Fig. 4 zu sehen ist, kann das Anschlagelement auch als scheiben- bzw. plattenförmiges Teil 45' ausgebildet sein, das z.B. an einem Ende der Achse 30 mit dieser über einen Presssitz verbunden ist. Zwischen dem Anschlagelement 45' und der Lagerbuchse 46 bzw. der darin befindlichen Halbkugel wirkt das Federelement 44 und sorgt für die oben beschriebene axiale Vorspannung. Das Federelement ist hier als Spiralfeder 44 ausgebildet, welche zumindest an einem ihrer Windungsenden nicht abgeflacht ist, sondern mit diesem Ende 44a selbst bzw. der Spitze davon partiell auf die Lagerbuchse drückt. Das Windungsende 44a der Spiralfeder drückt hier partiell bzw. punktuell auf einen Teil der ebenen Stirnfläche der Halbkugel. Vorzugsweise kann noch eine Gleitscheibe zwischen Federende 44a und Halbkugel 46 eingebaut sein. Durch den partiell wirkenden Federdruck erfährt die Halbkugel ein Drehmoment um eine imaginäre Achse, die senkrecht zur Drehachse der Achse 30 liegt. Sofern die Bohrung in der Halbkugel deutlich größer als der Durchmesser der Achse 30 ist und ein radiales Spiel sich einstellen will, bewirkt das Drehmoment eine leichte Verschränkung der Halbkugel und sorgt somit für eine Kompensation des Spiels. Diese Lagerung der Achse 30 bewirkt zusätzlich zu der oben beschriebenen axialen Vorspannung der Achse, dem selbst zentrierenden Effekt und der Kompensation von axialem Spiel, noch eine Kompensation für radiales Spiel.

Insgesamt ergibt sich eine Drosselklappe, die eine sehr vorteilhafte Lagerung aufweist, welche zudem auf die jeweiligen Gegebenheiten optimal eingestellt werden kann. Anstelle einer Spiralfeder kann auch jedes andere Federelement, wie etwa eine nachgebende, elastische Hülse oder dergleichen vorgesehen werden. Durch die vorgeschlagene Lösung wird insgesamt eine neue Drosselklappe mit elastischer Lagerung in Form einer oder zwei Ausgleichsbuchse(n) geschaffen. Vorzugsweise werden hier Drosselklappen in Auspuffanlagen eingesetzt, jedoch ist jede andere Art von Anwendungsgebiet denkbar.

### Bezugszeichenliste

- M: Auspuffinuffe
- R: Auspuffrohr
- S: Schweißnaht
- 10: Gehäuseabschnitt (in Auspuffmuffe M)
- 16, 16': Ausnehmung bzw. Aufnahme für Lagerbuchse (Halbkugel); als in den Gehäuseabschnitt 10 eingefräste Aufnahme oder als schwimmend gelagertes Aufnahme-Element ausgebildet
- 20: Drosselklappe
- 30: Achse (bzw. Welle)
- 31: Gewinde (am Achsenende)
- 40, 40', 40": Lager (mit halbkugelförmiger Lagerbuchse 46 oder 46') in verschiedenen Ausführungsformen
- 44: Federelement (in Gestalt einer Spiralfeder)
- 44a: Windungsende der Spiralfeder (drückt partiell auf Halbkugel in Lagerbuchse 46)
- 45, 45': Anschlagelement (in Gestalt einer Schraube bzw. Scheibe)
- 46, 46': Lagerbuchse (als Halbkugel ausgebildet, ggf. mit Kugelbahn für Kugelring 49)
- 47: Gleitscheibe (zwischen Federelement 44 und Lagerbuchse 46)
- 48: Ringscheibe mit Kugelbahn
- 49: Kugeln bzw. Kugelringlager

## Patentansprüche

1. Drosselklappe (20), insbesondere für eine Auspuffanlage eines Fahrzeuges, wobei die Drosselklappe (20) in einem Gehäuseabschnitt (10) auf einer Achse (30) bzw. Welle angeordnet ist, die zumindest an einem ihrer Enden in einer kugelförmigen, insbesondere halbkugelförmigen, Lagerbuchse (46, 46') drehbar gelagert ist, wobei ein Federelement (44) die Lagerbuchse (46) in eine Ausnehmung (16, 16') des Gehäuseabschnitts (10) drückt, welche die Lagerbuchse (46, 46') zumindest teilweise formschlüssig aufnimmt,
**dadurch gekennzeichnet, dass** das Federelement (44) auf einer der Lagerbuchse (46, 46') gegenüberliegenden Seite gegen ein Anschlagelement (45) drückt, das mit der Achse (30) verbunden ist und somit die Achse (30) gegen die Lagerbuchse (46, 46') axial auf Zug vorspannt.

2. Drosselklappe (20) nach Anspruch 1, **dadurch gekennzeichnet, dass** das Anschlagelement ein Schraubelement, insbesondere eine Schraube (45) oder Mutter ist, das mittels eines an der Achse (30) vorgesehenen Gewindes (31) mit der Achse (30) verbunden ist.

3. Drosselklappe (20) nach Anspruch 2, **dadurch gekennzeichnet, dass** das Schraubelement (45) verstellbar ist und eine Auslenkung des Federelementes (44) zur Einstellung einer Zugspannung für die axial vorgespannte Achse (30) vorgibt.

4. Drosselklappe (20) nach einem der vorhergehenden Ansprüche, **dadurch gekennzeichnet, dass** die kugelförmige Lagerbuchse (46) mittels einer Halbkugel gebildet wird, welche von einem Ende der Achse (30) durchdrungen wird, wobei die Halbkugel eine Öffnung bzw. Bohrung aufweist, die um ein vorgebbare Toleranz größer als der Durchmesser der Achse (30) ist.

5. Drosselklappe (20) nach einem der vorhergehenden Ansprüche, **dadurch gekennzeichnet, dass** das Federelement eine Spiralfeder (44) ist, die an zumindest demjenigen Windungsende (44a), dass auf die Lagerbuchse (46) wirkt, nicht abgeflacht ist, sondern mit dem Windungsende (44a) auf einen Teil der die Lagerbuchse (46) drückt, so dass die Lagerbuchse (46) schräg gegen die Ausnehmung (16) des Gehäuseabschnitts (10) drückt.

6. Drosselklappe (20) nach einem der vorhergehenden Ansprüche, **dadurch gekennzeichnet, dass** zwischen Federelement (44) und Lagerbuchse (46) eine Gleitscheibe (47) vorgesehen ist.

7. Drosselklappe (20) nach einem der vorhergehenden Ansprüche, **dadurch gekennzeichnet, dass** die Lagerbuchse (46, 46') als eine Halbkugel ausgebildet ist.

8. Drosselklappe (20) nach einem der vorhergehenden Ansprüche, **dadurch gekennzeichnet, dass** die Ausnehmung als, insbesondere radial, schwimmend gelagertes Aufnahme-Element (16') für die Lagerbuchse bzw. Halbkugel (46, 46') ausgebildet ist.

9. Drosselklappe (20) nach Anspruch 7, **dadurch gekennzeichnet, dass** das Aufnahme-Element (16') konkav geformt ist, um die Lagerbuchse bzw. Halbkugel (46, 46') aufzunehmen, und eine Bohrung aufweist, die größer als der Durchmesser der Achse bzw. Welle (30) ist.

10. Drosselklappe (20) nach einem der vorhergehenden Ansprüche, **dadurch gekennzeichnet, dass** die Lagerbuchse bzw. Halbkugel (46') eine Stirnfläche mit einer darin ausgebildeten Kugellaufbahn für einen Kugelring (49) aufweist.

11. Drosselklappe (20) nach einem der vorhergehenden Ansprüche, **dadurch gekennzeichnet, dass** zwischen Federelement (44) und Lagerbuchse (46') eine Ringscheibe (49) mit Kugellaufbahn für einen Kugelring (49) vorgesehen ist.

12. Auspuffanlage mit einem Gehäuseabschnitt (10), der eine Drosselklappe (20) gemäß Anspruch 1 aufweist.

13. Auspuffanlage nach Anspruch 12, **dadurch gekennzeichnet, dass** der Gehäuseabschnitt (10) Teil einer Auspuffmuffe (M) ist, die mit einem Auspuffrohr (R) verbunden, insbesondere über eine Schweißnaht (S) verschweißt, ist.

14. Auspuffanlage nach Anspruch 12 oder 13, **dadurch gekennzeichnet, dass** die Drosselklappe (20) mit den Merkmalen gemäß einem der Ansprüche 2 bis 11 ausgebildet ist.

## Claims

1. Throttle valves (20), in particularly used for an exhaust system of a vehicle, wherein the throttle valve (20) is mounted in a housing section (10) on an axis (30) or shaft which is pivotally mounted on at least one of its ends in a ball-shaped particular in a hemispherical-shaped bearing sleeve (46, 46'), wherein a spring element (44) presses the bearing sleeve (46, 46') into a recess (16, 16') of the housing section (10), the recess accommodating the bearing sleeve (46, 46') at least partially in a form locking manner, **characterised in that** the spring element (44) presses against a stopper element (45) on the opposite side of the bearing sleeve (46, 46'), the stopper element being connected to the axis (30) and thus the axis being biased towards the bearing sleeve (46, 46') by axial tension.

2. Throttle valve (20) of claim 1, **characterised in that** the stopper element is a screw element, in particular a screw (45) or a nut, which is connected to the axis (30) by a thread (31) being provided at the axis (30).

3. Throttle valve (20) of claim 2, **characterised in that** the screw element (45) is adjustable and provides a displacement of the spring element (44) for adjusting a tension force for the axis (30) being axial biased.

4. Throttle valve (20) of one of the preceding claims, **characterised in that** the ball-shaped bearing sleeve (46) is constituted by a hemispherical ball which is penetrated by one end of the axis (30) wherein the hemispherical ball comprises an opening or a borehole being larger than the diameter of the axis (30) by a predetermined tolerance.

5. Throttle valve (20) of one of the preceding claims, **characterised in that** the spring element is a coil spring (44) which is at least not flattened at that winding end (44a) which acts on the bearing sleeve (46), but presses with said winding end (44a) on a portion of the bearing sleeve (46) so that the bearing sleeve (46) presses in an angular or tilt position against the recess (16) of the housing section (10).

6. Throttle valve (20) of one of the preceding claims, **characterised in that** between the spring element and the bearing sleeve a gliding disc or ... is provided.

7. Throttle valve (20) of one of the preceding claims, **characterised in that** bearing sleeve (46, 46') is designed to be a hemispherical ball.

8. Throttle valve (20) of one of the preceding claims, **characterised in that** recess is designed to be a receiving element (16') for the bearing sleeve or the hemispherical ball (46, 46'), in particular a receiving element being mounted in a radial floating manner.

9. Throttle valve (20) of claim 7, **characterised in that** the receiving element is dished in order to receive the bearing sleeve or the hemispherical ball (46, 46') and comprises a borehole being larger than the diameter of the axis or the shaft.

10. Throttle valve (20) of one of the preceding claims, **characterised in that** the bearing sleeve or the hemispherical ball comprises a front surface having formed therein a ball track for a ball ring (49).

11. Throttle valve (20) of one of the preceding claims, **characterised in that** between the spring element (44) and the bearing sleeve (46') a ring washer(49) is provided, the ring washer having therein a ball track for a ball ring.

12. Exhaust system with a housing section (10) comprising a throttle valve (20) according to claim 1.

13. Exhaust system of claim 12, **characterized in that** the housing section (10) is part of an exhaust pipe collar (M) being connected to the exhaust pipe (R), in particular by a weld seam.

14. Exhaust system of claim 12 or 13, **characterized in that** throttle valve (20) is designed by the features according to one of the claims 2 to 11.

## Revendications

1. Clapet d'étranglement (20), en particulier pour une installation d'échappement d'un véhicule, le clapet d'étranglement (20) étant disposé dans une partie de corps (10) sur un axe (30) et/ou un arbre, qui est logé de manière rotative au moins au niveau d'une de ses extrémités dans un coussinet (46, 46') sphérique, en particulier semi-sphérique, un élément formant ressort (44) poussant le coussinet (46) dans un évidement (16, 16') de la partie de corps (10), lequel reçoit le coussinet (46, 46') au moins en partie par correspondance de forme,
**caractérisé en ce que** l'élément formant ressort (44) pousse d'un côté opposé au coussinet (46, 46') contre un élément de butée (45), qui est relié à l'axe (30) et précontraint ainsi axialement l'axe (30) contre le coussinet (46, 46') par effort de traction.

2. Clapet d'étranglement (20) selon la revendication 1,
**caractérisé en ce que** l'élément de butée est un élément de vissage, en particulier une vis (45) ou un écrou, qui est relié à l'axe (30) à l'aide d'un filetage (31) prévu au niveau de l'axe (30).

3. Clapet d'étranglement (20) selon la revendication 2,
**caractérisé en ce que** l'élément de vissage (45) est réglable et prédéfinit une déviation de l'élément formant ressort (44) pour le réglage d'un effort de traction pour l'axe (30) axialement précontraint.

4. Clapet d'étranglement (20) selon l'une quelconque des revendications précédentes, **caractérisé en ce que** le coussinet (46) sphérique est formé à l'aide d'une demi-sphère, qui est traversée par une extrémité de l'axe (30), la demi-sphère présentant une ouverture respectivement un perçage, qui est plus grand que le diamètre de l'axe (30) d'une tolérance prédéfinissable.

5. Clapet d'étranglement (20) selon l'une quelconque des revendications précédentes, **caractérisé en ce que** l'élément formant ressort est un ressort hélicoïdal (44), qui n'est pas aplati au moins au niveau de l'extrémité de spire (44a), qui agit sur le coussinet (46), mais pousse avec l'extrémité de spire (44a) sur une partie du coussinet (46) de sorte que le coussinet (46) pousse en biais contre l'évidement (16) de la partie de corps (10).

6. Clapet d'étranglement (20) selon l'une quelconque des revendications précédentes, **caractérisé en ce qu'**une rondelle de glissement (47) est prévue entre l'élément formant ressort (44) et le coussinet (46).

7. Clapet d'étranglement (20) selon l'une quelconque des revendications précédentes, **caractérisé en ce que** le coussinet (46, 46') est réalisé sous forme de demi-sphère.

8. Clapet d'étranglement (20) selon l'une quelconque des revendications précédentes, **caractérisé en ce que** l'évidement est réalisé sous forme d'élément de réception (16') logé de manière flottante, en particulier radiale, pour le coussinet respectivement la demi-sphère (46, 46').

9. Clapet d'étranglement (20) selon la revendication 7,
**caractérisé en ce que** l'élément de réception (16') est de forme concave pour recevoir le coussinet respectivement la demi-sphère (46, 46') et présente un perçage qui est plus grand que le diamètre de l'axe respectivement de l'arbre (30).

10. Clapet d'étranglement (20) selon l'une quelconque des revendications précédentes, **caractérisé en ce que** le coussinet respectivement la demi-sphère (46') présente une surface frontale avec une piste de roulement à billes réalisée à l'intérieur pour une bague de roulement à billes (49).

11. Clapet d'étranglement (20) selon l'une quelconque des revendications précédentes, **caractérisé en ce qu'**une rondelle annulaire (49) avec piste de roulement à billes pour une bague de roulement à billes (49) est prévue entre l'élément formant ressort (44) et le coussinet (46').

12. Installation d'échappement avec une partie de corps (10) qui présente un clapet d'étranglement (20) selon la revendication 1.

13. Installation d'échappement selon la revendication 12,
**caractérisée en ce que** la partie de corps (10) fait partie d'un manchon d'échappement (M), qui est relié à un tuyau d'échappement(R), en particulier soudé par le biais d'un cordon de soudure (S).

14. Installation d'échappement selon la revendication 12 ou 13, **caractérisée en ce que** le clapet d'étranglement (20) est réalisé avec les caractéristiques selon l'une quelconque des revendications 2 à 11.
